# EUROPÄISCHE PATENTSCHRIFT

(11) **EP 1 808 064 B1**
(45) Veröffentlichungstag und Bekanntmachung des Hinweises auf die Patenterteilung: **05.11.2008**
(21) Anmeldenummer: 07008740.8
(22) Anmeldetag: 06.10.2003
(51) Int. Cl.: A01D 75/30

(54) **Selbstfahrendes Grossflächenmähwerk**
Self-propelled mower for large areas
Faucheuse de grande surface automobile

(30) Priorität: 06.10.2002 DE 10246415
(43) Veröffentlichungstag der Anmeldung: 18.07.2007
(62) Teilanmeldung aus: 03022390.3
(73) Patentinhaber: CLAAS Saulgau GmbH, 88348 Bad Saulgau (DE)
(72) Erfinder: Geng, Manfred, 88348 Bad Saulgau (DE); Kleinemenke, Heinrich, 33428 Harsewinkel (DE); Prenzler, Jürgen, 88379 Oberwaldhausen (DE)
(74) Vertreter: Roth, Klaus

(56) Entgegenhaltungen:
- EP-A1- 0 808 556
- EP-B- 1 489 896
- FR-A1- 2 638 597
- US-A- 3 720 047
- US-A- 3 731 469

## Beschreibung

Die Erfindung betrifft ein selbstfahrendes Mähwerk gemäss dem gattungsbildenden Oberbegriff des Anspruchs 1.

Es sind selbstfahrende mobile Arbeitsmaschinen unter dem Begriff selbstfahrende Mähwerke bekannt, die vornehmlich im Bereich der Landwirtschaft zum Ernten von Grünfutter eingesetzt werden. Diese bestehen im wesentlichen aus dem Trägerfahrzeug mit Fahrgestell und motorischem Antrieb und den dazugehörigen Antriebskomponenten zur Erzeugung der Traktionskräfte, dem Führerhaus einschließlich der erforderlichen Lenk- und Steuereinrichtungen, sowie um ein mechanisches aus Getrieben und Gelenkwellen bestehendes Energieverzweigungssystem zum Antrieb der eigentlichen Arbeitswerkzeuge, wobei es sich hierbei um Mäheinheiten handelt. Dazu zählen auch Energieversorgungssysteme elektrischer und hydraulischer Art, die prinzipiell bei modernen selbstfahrenden Arbeitsmaschinen den Stand der Technik mit bestimmen.

Erzeugt wird die Gesamtarbeitsbreite von derartigen selbstfahrenden Mähwerken aus der Kombination und dem Zusammenwirken von mehreren Mäheinheiten, insbesondere durch eine Kombination von Front- und Seitenmähwerken, die als Kreiselmähwerke ausgebildet sind. Die Gesamtarbeitsbreite derartiger selbstfahrender Mähwerke ergibt sich somit additiv aus den Einzelarbeitsbreiten dieser zusammenwirkenden Mäheinheiten.

Dabei sind Kombinationen von Mäheinheiten bekannt, die aus Front- und Seitenmähwerken bestehen, die beidseitig zur Längsmittelachse des Trägerfahrzeugs angeordnet sind siehe z.B. EP-A- 808 556. Eine Kombination dieser Art kann beispielsweise ausschließlich frontseitig im Frontanbauraum, oder auch aufgespalten derart sein, dass im Frontanbauraum ausschließlich ein Frontmähwerk, im Zwischenachsanbauraum beidseitig je ein Seitenmähwerk oder im Heckanbauraum zwei Seitenmähwerke angebaut sind.

Da derartige Mähwerke wegen der erforderlichen Teilnahme am öffentlichen Straßenverkehr auf das zulässige Straßentransportprofil beschränkt sind, ergeben sich auch Grenzen hinsichtlich der durch die Kombination von Mähwerken erzielbaren Arbeitsbreiten, die derzeit etwa bei 10 Metern liegen.

Dabei müssen derartige selbstfahrende Arbeitsmaschinen durch ihre konstruktive Ausgestaltung auch die Voraussetzungen beinhalten, dass sie in den verschiedenen Betriebszuständen sicher beherrschbar sind, und zwar sowohl, was den Betriebszustand der reinen Transportfahrt, als auch den während des eigentlichen Arbeitsprozesses anbetrifft.

Hier setzt die erfinderische Aufgabenstellung an mit dem Ziel, unter den vorgenannten Gesichtspunkten ein selbstfahrendes Mähwerk zu schaffen, welches die bekannten Arbeitsbreiten wesentlich überschreitet und wobei die sichere Beherrschbarkeit trotz der wesentlich vergrößerten Arbeitsbreite gegeben ist. Hier stößt die Vergrößerung der Arbeitsbreite im Zuge der technischen Weiterentwicklung an Grenzen, die mit erfinderischen Mitteln zu überwinden sind. Die Überwindung dieser Grenzen stellt somit einen Quantensprung dar, der den Ausgangspunkt der Erfindung darstellt.

Aufgabe der Erfindung ist es somit, ein selbstfahrendes Mähwerk als Großflächenmähwerk zu schaffen, welches die Arbeitsbreite bekannter selbstfahrender Mähwerke wesentlich überschreitet, wobei der Fokus der erfinderischen Überlegungen darauf gerichtet ist, die Betriebssicherheit dieses selbstfahrenden Mähwerks, sowohl unter Betriebsbedingungen im Mähbetrieb, als auch unter den Betriebsbedingungen in der Straßentransportfahrt zur Teilnahme am öffentlichen Verkehr, beherrschbar zu machen und somit sicher zustellen.

Gelöst wird die Aufgabe der Erfindung mit den kennzeichnenden Merkmalen des unabhängigen Hauptanspruchs. Weitere vorteilhafte Ausgestaltungen der Erfindung sind den abhängigen Ansprüchen, der Beschreibung und den Figurendarstellungen zu entnehmen.

Gemäß der Erfindung ist das Führerhaus in seine Lage in Bezug auf die Fahrtrichtung und in Bezug auf den Betriebszustand des Mähens im rückwärtigen Bereich des Trägerfahrzeugs positioniert und im Bezug auf den Betriebszustand des Straßentransports im vorderen Bereich des Trägerfahrzeugs positioniert.

Vorzugsweise kann das Führerhaus einschließlich des Führerstandes um 180° geschwenkt werden.

Ein selbstfahrendes Mähwerk nach der Erfindung besteht aus einem Trägerfahrzeug mit seitlich im Zwischenachsbauraum an Klappgelenken an das Fahrgestell mittels längenveränderbarer Ausleger angelenkten Seitenmähwerken, die mit einer im Betriebszustand des Mähens frontseitig angelenkten Mäheinheit und steuerungstechnisch zusammenarbeiten.

Dabei sind die Ausleger der Seitenmähwerke, die die Arbeitsbreite über das bekannte Maß erhöhen, konstruktiv so ausgestaltet, dass diese Mehrfachfunktionen in sich bergen, die einerseits im laufenden Betriebszustand genutzt werden und die andererseits dazu dienen, diese Seitenmähwerke in das Transportprofil für den Straßentransport zu überführen.

Dabei sind die Ausleger so gestaltet, dass diese, bedingt durch die Längenveränderbarkeit, in Ihrer Arbeitsteilung die Seitenmähwerke soweit nach außen positionieren, dass diese unter Berücksichtigung der erforderlichen Überdeckung die Arbeitsbreite der frontseitigen Mäheinheit etwa um die Summe der beiden Arbeitsbreiten dieser Seitenmähwerke erhöht. Dabei sind die Seitenmähwerke gleichzeitig mittels eines vertikalen Kniegelenks 33 mit etwa vertikaler Drehachse, an dem längenveränderbaren Ausleger angelenkt, wobei das Kniegelenk 33 zur Übertragung der für die Mitnahme erforderlichen Schleppkraft durch eine Drehmomentenstütze überbrückt ist.

Am freien Ende der jeweiligen längenveränderbaren Ausleger sind dabei diese Seitenmähwerke um eine waagerechte fahrtrichtungsparallele Drehachse pendelbar in Drehlagern an diese Ausleger angelenkt.

Damit die so angelenkten Seitenmähwerke von dem Gewicht ihres längenveränderbaren Auslegers und teilweise von ihrem Eigengewicht entlastet werden, wird ein entsprechendes Drehmoment, angreifend um die Schwenkachse des Klappgelenks, wirksam, welches sich an dem Trägerfahrzeug abstützt. Somit wird ein großer Teil der Gewichtskräfte von dem Seitenmähwerk auf das Trägerfahrzeug übertragen und somit von den Rädern des Trägerfahrzeugs am Boden abgestützt. In besonders vorteilhafter Weise werden dazu die Klappzylinder als Druckmittelzylinder zum verschwenken der längenveränderbaren Ausleger genutzt, indem diese mit einem hydraulischen Restdruck während des laufenden Arbeitsprozesses im Mähbetrieb beaufschlagt werden. Die Erzeugung dieses Restdrucks kann beispielsweise durch ein load-sensing - Druckregelventil, beispielsweise ausgebildet als Proportional-Druckventil, erfolgen.

Das in den längenveränderbaren Ausleger integrierte mit einem Druckmittelzylinder überbrückte vertikale Kniegelenk kann einerseits genutzt werden als Bestandteil einer Überlastsicherung und damit als Anfahrsicherung und andererseits als Kniegelenk, um das herum der Ausleger eingeknickt wird um die Transporthöhe der Seitenmähwerke im hochgeklappten Zustand zu reduzieren.

Im Betriebszustand des Mähens ist der Kolben der das vertikale Kniegelenk 33, nachfolgend als Kniegelenk bezeichnet, durch den überbrückenden Druckmittelzylinder, ausgebildet als Differentialkolbenzylinder, starr gesetzt. Dieses geschieht zweckmäßigerweise dadurch, dass die Kolbenstange hydraulisch durch ein entsperrbares Doppelrückschlagventil eingespannt ist. Um eine Überlastsicherung zu realisieren kann dabei das Doppelrückschlagventil durch ein Druckbegrenzungsventil derart überbrückt werden, dass bei Anstieg des Einspanndrucks über ein bestimmtes voreingestelltes Maß hinaus das Druckbegrenzungsventil öffnet und somit die Kolbenstange dann quasi widerstandslos ausweichen kann, so dass das Kniegelenk den Anfahrkräften nachgeben kann.

Andererseits kann durch gezieltes Betätigen eines entsprechenden Wegeventils der das Kniegelenk überbrückende Druckmittelzylinder so angesteuert werden, dass das Kniegelenk entweder abgewinkelt oder gestreckt wird, wobei die gestreckte Lage die Arbeitsposition und die abgewinkelte Lage die Transportposition darstellt.

Des weiteren kann die Längenveränderbarkeit des Auslegers, welche beispielsweise durch Ausgestaltung des Auslegers als teleskopierbarer Ausleger erzeugt werden kann, genutzt werden, um Hindernissen im äußeren Bereich des Mähwerks auszuweichen ohne dass dabei die Fahrspur durch vorübergehende Richtungsänderungen verlassen werden müsste. Derartige Hindernisse können beispielsweise Zaunpfähle oder Strommasten darstellen, die an den Feldrändern aufgestellt sind. Unterstütz werden kann diese Funktion auch beispielsweise durch ein lasergestütztes Ortungssystem.

Eine weitere vorteilhafte Nutzung der Erfindung stellt die Möglichkeit dar, die Längenveränderbarkeit im laufenden Mähbetrieb dazu zu nutzen, um in Kurvenfahrt die außenliegenden Mähwerke unabhängig voneinander quer zur Fahrtrichtung zu verschieben, um dadurch Streifen ungemähten Futters zu vermeiden.

Dieser Vorgang der Querverschiebung kann beispielsweise durch Mikroprozessoreinsatz automatisiert werden, indem beispielsweise die Achskegelräder der Abtriebswellen und/oder die Ausgleichskegelräder einer oder beider Antriebsachsen des Differentialgetriebes des Trägerfahrzeugs auf Drehwinkelversatz überwacht werden. Dieser Drehwinkelversatz kann durch entsprechende Drehwinkelerfassungssensoren erfasst werden, die wiederum Eingangssignale an eine Auswerteeinheit liefern, mittels derer der momentane Kurvenradius des Trägerfahrzeugs errechnet wird.

Mit dem momentan bekannten Kurvenradius der Spur des Trägerfahrzeugs lassen sich die ebenfalls momentan erforderlichen Querverschiebungen der an den längenveränderbaren Auslegern angelenkten Seitenmähwerke errechnen, die erforderlich sind, um ungemähte Steifen durch Überdeckungslücken, die ohne diese Querverschiebungen entstehen würden, zwischen der frontbauraumseitig im Einsatz befindlichen Mähkombination und den äußeren Seitenmähwerken zu vermeiden.

In besonders vorteilhafter Weise sind dazu die längenveränderbaren Stellelemente, z.B. druckmittelbeaufschlagte Stellzylinder, mit einem Wegmesssensor ausgestattet, welches eine Aussage liefert über den momentan eingestellten Istzustand des Stellelements. Somit kann eine Rückkopplung geschaffen werden zwischen einer Kontroll- und Steuereinheit, die einerseits Überdeckungslücken vermeidet und die im Randzonenbereich Kollisionen mit Hindernissen entgegenwirkt.

Auch in Verbindung mit einem Bestandskantenerkennungssystem (Laserpilot), beispielsweise auf der Basis eines Laserstrahlreflektionssystems und einer daran gekoppelten Steuerung in Bezug auf die feinsensorische Steuerung der Querverschiebung der äußeren Mäheinheiten können Streifenbildungen durch stehen bleiben von ungemähtem Futter vermieden werden.

Dabei erweißt es sich als besonderer Vorteil, wenn Hinter- und Vorderachse des Trägerfahrzeugs unabhängig voneinander gelenkt werden können und das Trägerfahrzeug im sogenannten Hundegang gefahren und gesteuert werden kann. Dieses beinhaltet insbesondere den Vorteil, wenn der Fahrer nach dem Vorgewende die Bestandskante verfehlt und dadurch entweder eine zu geringe eine ungewollte zu große Überdeckung zwischen einer äußeren Mäheinheiten und der Bestandskante erzielt. Dadurch kann der Querversatz des Trägerfahrzeugs in Bezug auf die optimale Spuranpassung im Abstand zur Bestandskante auf einer minimalen Wegstrecke durchgeführt werden.

Dabei ist es besonders hilfreich, wenn der Steuerstand des Fahrers mit je einem rechts- bzw. links getaktetem Tippschalter, hand - oder fußbetätigbar, ausgestattet ist derart, dass diese es ermöglichen, durch einen durch diese Tipptaster ausgelösten Steuerimpuls nach vorbestimmten Programmablauf unter Anwendung des Prinzip der Hundegangsteuerung, das Trägerfahrzeug in die jeweils gewünschte Richtung schnellstmöglich bei minimalem Fahrweg quer zur Fahrtrichtung zu versetzen.

Diese Ausgestaltung eines selbstfahrenden Großflächenmähwerks auf der Basis von längenveränderbaren und steuerbaren seitlich im Zwischenachsanbauraum des Trägerfahrzeugs angelenkten Auslegern in Verbindung mit Mess- und Steuersystemen, die Auskunft darüber geben, in welchem Betriebszustand sich das System "Großflächenmähwerk" befindet, und auf welche äußeren Umgebungsparameter das Großflächenmähwerk momentan zu reagieren hat, wobei wesentliche Sicherheitsfunktionen von einer Kontrolleinheit im Sinne eines Mikroprozessors automatisch gesteuert werden, entlasten den Fahrer derart, dass dieser seine Aufmerksamkeit dem Betriebszustand als Ganzes distributiv widmen kann.

Dieses wiederum ermöglicht sicher beherrschbare Arbeitsbreiten, die im Bereich von etwa 15 m oder größer liegen, und welche eine Überschreitung der derzeit bekannten Arbeitsbreiten um etwa 50 % ermöglichen.

Um eine gute Manövrierfähigkeit des Trägerfahrzeugs im Straßenverkehr sicher zustellen ist es von besonderem Vorteil, wenn das Führerhaus des Trägerfahrzeugs über eine Rückfahreinrichtung verfügt. Dazu kann das Führerhaus einschließlich des Führerstands um 180° geschwenkt werden.

Dabei ist das Führerhaus in seine Lage und Bezug auf die Fahrtrichtung und in Bezug auf den Betriebszustand des Mähens im rückwärtigen Bereich des Tragerfahrzeugs positioniert und im Bezug auf den Betriebszustand des Straßentransports im vorderen Bereich des Trägerfahrzeugs positioniert.

Somit kann, nachdem die Mäheinheiten in ihre Transportposition verklappt worden sind, das Führerhaus um 180° verschwenkt werden, so dass sich dadurch die Frontkombination nunmehr im Straßentransport heckseitig am Trägerfahrzeug befindet und die seitlichen Mäheinheiten sich dabei entgegen der Fahrtrichtung hinter dem Führerhaus befinden. Dadurch bedingt ist dem Fahrer im Betriebszustand des Mähens die Sicht auf die vor Ihm liegenden Mäheinheiten nach vorn und zur Seite und im Betriebszustand der Straßentransportfahrt ebenfalls nach vorn und zur Seite völlig freigegeben.

Somit stellt die Positionierung des Führerhauses in Verbindung mit der Rückfahreinrichtung und in Verbindung mit der Positionierung der Frontmäheinheiten in Verbindung mit der Positionierung der seitlichen Mäheinheiten an längenveränderbaren Auslegern nach der Erfindung eine Ausgangssituation als Basis zum sicheren Führen von Großflächenmähwerken sowohl im Betriebszustand des Mähbetriebs als auch im Betriebszustand der Straßentransportfahrt dieser Größenordnung dar.

Damit schafft die Erfindung nicht nur die Voraussetzungen zur Erhöhung der Flächenleistung eines selbstfahrenden Mähwerks, sondern sie liefert gleichermaßen einen erheblichen Beitrag zur Verbesserung der Betriebssicherheit in allen Betriebszuständen, und zwar sowohl im Mäh- als auch im Transportbetrieb.

### Bezugszeichenliste

- 1: Trägerfahrzeug
- 2,2': Seitenmäheinheit
- 3: Frontmäheinheit
- 4: Mähbalken
- 5: Aufbereiter
- 6: Frontanbauraum
- 7,7': Zwischenachsanbauraum
- 8,8': Vorderachse
- 9: Hinterachse
- 10: Hauptlängsmittelebene
- 11: Fahrgestell
- 12,12': horizontales Klappgelenk
- 13,13': Schwenkachse
- 14: Führerhaus
- 15: Arbeitsbreite
- 16: Arbeitsbreite
- 17: Gesamtarbeitsbreite
- 18: Überdeckung
- 19: Arbeitsbreite
- 20,20': Seitenmäheinheit
- 21,21': längenveränderbarer Ausleger
- 22: Gesamtarbeitsbreite
- 23,23': Verschiebeweg
- 24,24': Frontmähwerkskombination
- 25: Teleskopelemente
- 26: Teleskopelemente
- 27: Teleskopelemente
- 28: Überdeckung
- 29: Ortungssystem
- 30: Außenkontur
- 31: Schwenkwinkel
- 32: Schwenkwinkel
- 33: Kniegelenk
- 34: Hindernis
- 35: Arbeitskonturbreite
- 36: Transportkonturbreite
- 37: mittlerer Kurvenradius
- 38: innerer Überdeckungsradius
- 39: Verschiebung
- 40: Hydraulikzylinder
- 41: Hydraulikzylinder
- 42: Hydraulikzylinder
- 43: Hydraulikzylinder
- 44: Anschlagpunkt
- 45: Anschlagpunkt
- 46: Anschlagpunkt
- 47: Anschlagpunkt
- 48: Anschlagpunkt
- 49: Anschlagpunkt
- 50: Verschiebung
- 51: Wegmesssystem
- 52: Kolbenstange
- 53: Kolbenstange
- 54: Kolbenstange
- 55: Wegeventil
- 56: Wegeventil
- 57: Wegeventil
- 58: Druckbegrenzungsventil
- F,F': Fahrtrichtung
- P: Druckleitung
- T: Tankleitung

- Fig. 1: zeigt ein Ausführungsbeispiel eines selbstfahrenden Mähwerks in bekannter Ausführung in einer Draufsicht in Arbeitsposition in Geradeausfahrt.
- Fig. 2: zeigt ein weiteres Ausführungsbeispiel eines selbstfahrenden Mähwerks in bekannter Ausführung in einer Draufsicht in Arbeitsposition in Geradeausfahrt.
- Fig. 3: zeigt ein Ausführungsbeispiel eines selbstfahrenden Mähwerks nach der Erfindung in einer Draufsicht in Arbeitsposition in Geradeausfahrt.
- Fig. 3a: zeigt eine alternative Ausführungsform eines selbstfahrenden Mähwerks nach der Erfindung in einer Draufsicht in Arbeitsposition in Geradeausfahrt.
- Fig. 3b: zeigt einen längenveränderbaren Ausleger nach der Erfindung in einer Draufsicht gemäß Fig. 3 bzw. Fig. 3a in vergrößerter Darstellung mit um die Hochachse des Kniegelenks in gestreckter Lage dargestellten äußeren Mäheinheit.
- Fig. 3c: zeigt einen längenveränderbaren Ausleger nach der Erfindung gemäß Fig. 3b in einer rückwärts gerichteten abgewinkelten Lage dargestellten äußeren Mäheinheit.
- Fig. 3d: zeigt einen längenveränderbaren Ausleger nach der Erfindung gemäß Fig. 3b in einer vorwärts gerichteten abgewinkelten Lage dargestellten äußeren Mäheinheit.
- Fig. 3e: zeigt einen längenveränderbaren Ausleger nach der Erfindung gemäß Fig. 3b mit in Richtung des Fahrgestells verrückter äußeren Mäheinheit.

- Fig. 3f: zeigt einen längenveränderbaren Ausleger nach der Erfindung gemäß Fig. 3b mit maximaler in Richtung des Fahrgestells verrückter äußeren Mäheinheit
- Fig. 3g: zeigt einen vereinfachten hydraulischen Schaltplan zur Steuerung der Hydraulikzylinder des längenveränderbaren Auslegers.
- Fig. 4: zeigt ein Ausführungsbeispiel eines selbstfahrenden Mähwerks analog Fig. 3, jedoch mit in Richtung des Fahrgestells verrückter äußeren Mäheinheit gemäß Fig. 3e, welches bei unveränderter Spur einem Hindernis ausweicht.
- Fig. 4a: zeigt ein Ausführungsbeispiel eines selbstfahrenden Mähwerks analog Fig. 4 in einer Kollisionssituation mit einem Hindernis und mit abgewinkelter Lage der äußeren Mäheinheit gemäß Fig. 3c.
- Fig. 5: zeigt ein Ausführungsbeispiel eines selbstfahrenden Mähwerks analog Fig. 3 in einer Kurvenfahrt mit korrigierter Überdeckung.
- Fig. 6: zeigt ein Ausführungsbeispiel eines selbstfahrenden Mähwerks analog Fig. 3 in einer Zwischenphase zur Verklappung der Seitenmäheinheiten in ihre Transportstellung.
- Fig. 7: zeigt ein Ausführungsbeispiel eines selbstfahrenden Mähwerks in seiner Endphase nach der Überführung der Seitenmäheinheiten in ihre Transportposition.
- Fig. 8: zeigt ein Ausführungsbeispiel eines selbstfahrenden Mähwerks nach der Erfindung in einer Draufsicht in Arbeitsposition in Geradeausfahrt, wobei die Forderachse des Trägerfahrzeugs als Zweifachachse ausgebildet ist.
- Fig. 9: zeigt ein Ausführungsbeispiel eines selbstfahrenden Mähwerks nach der Erfindung in einer Draufsicht in Arbeitsposition in Geradeausfahrt, wobei die Forderachse des Trägerfahrzeugs als Zweifachachse ausgebildet ist und beide Achsen soweit auseinander gerückt sind, dass diese ebenfalls eine Zwischenachsanbauraum bilden.

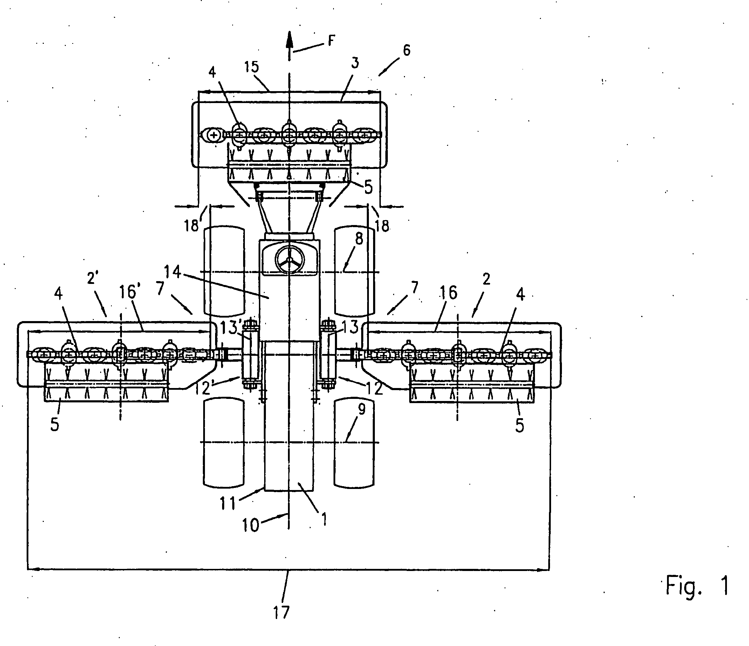

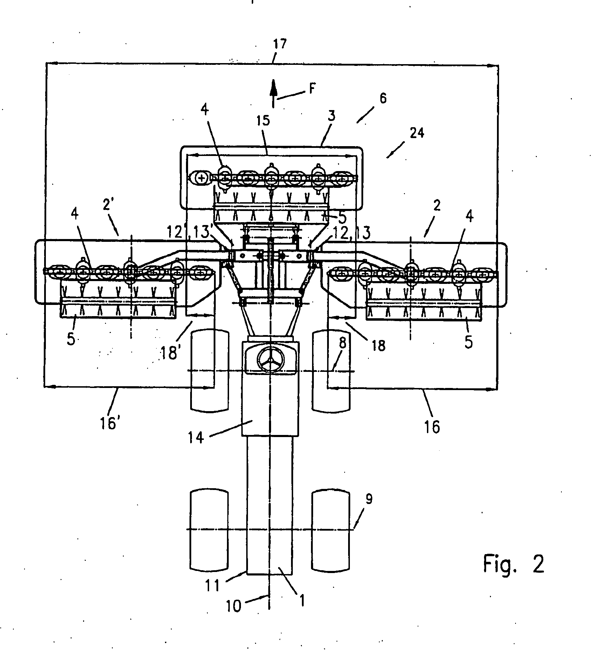

In Fig. 1 und Fig. 2 sind je ein Ausführungsbeispiel eines selbstfahrenden Mähwerks in bekannter Ausführung in Arbeitsstellung und in Geradeausfahrt vereinfacht dargestellt.

An dem Trägerfahrzeug 1 sind jeweils eine Frontmäheinheit 3 und zwei Seitenmäheinheiten 2,2' angebaut, die in ihrer Gesamtheit eine Mähwerkskombination 24 bilden. Die Front- und Seitenmähwerke sind als Kreiselmähwerke dargestellt, deren Mähscheiben in Mähbalken 4 umlaufend angetrieben gelagert sind und an denen ein Aufbereiter 5 entgegen der Fahrrichtung F rückwärtig nachgeordnet ist.

In Fig.1 sind die Seitenmähwerke als Seitenmäheinheiten 2,2' zwischen der Vorderachse 8 und der Hinterachse 9, und somit im Zwischenachsbauraum 7, symmetrisch zur lotrechten Hauptlängsmittelebene 10 des Trägerfahrzeugs 1 an Klappgelenken 12,12' mit um etwa in Fahrtrichtung weisende Schwenkachsen13,13' an das Fahrgestell 11 angelenkt.

In Fig.2 sind die Seitenmähwerke als Seitenmäheinheiten 2,2' einschließlich der Frontmäheinheit 3 vor der Vorderachse 8 und damit im Frontanbauraum 7 des Trägerfahrzeugs 1 an Klappgelenken 12,12' mit um etwa in Fahrtrichtung weisende Schwenkachsen 13,13' an das Fahrgestell 11 angelenkt. Die Gesamtarbeitsbreite 17 des selbstfahrenden Mähwerks ergibt sich aus der Summe der Arbeitsbreiten 15,16,16' abzüglich der Überdeckungen 18,18'.

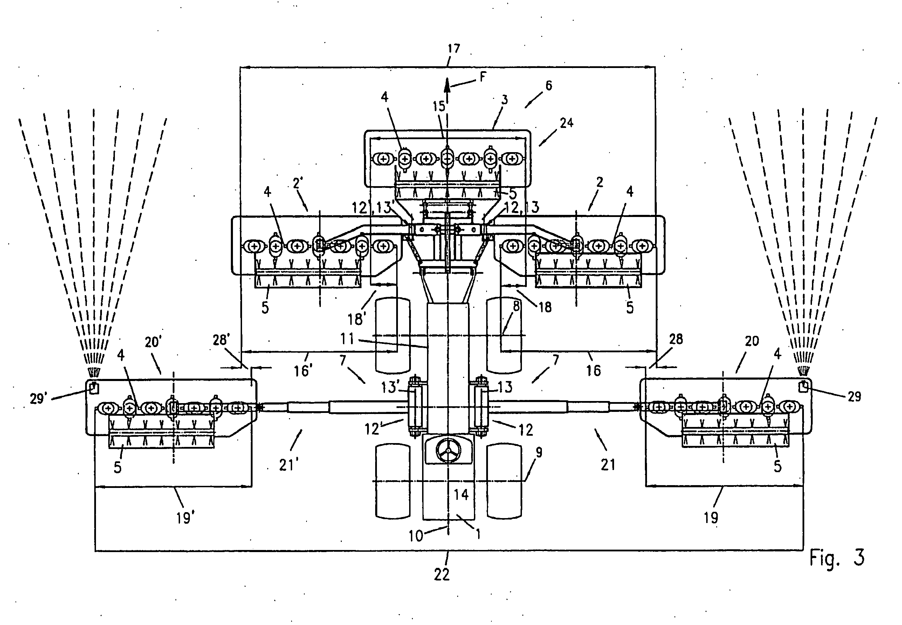

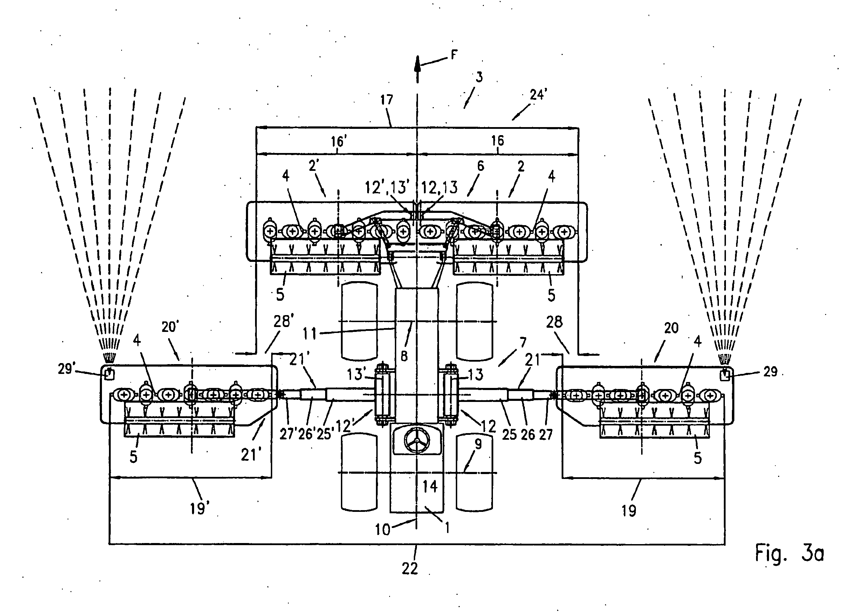

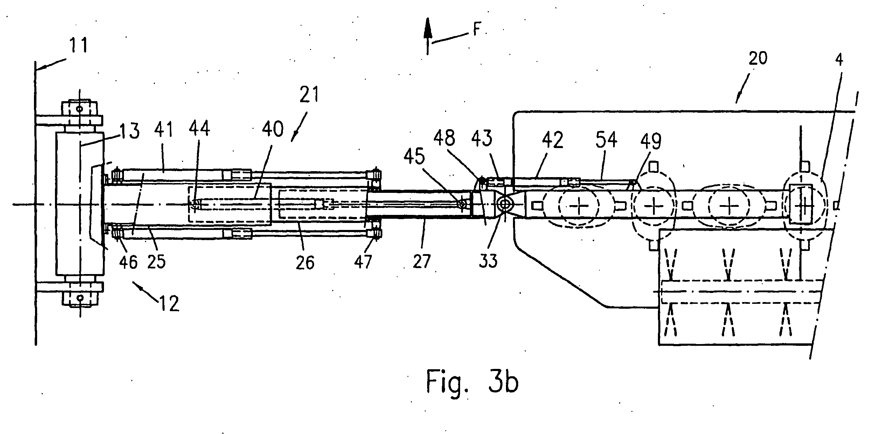

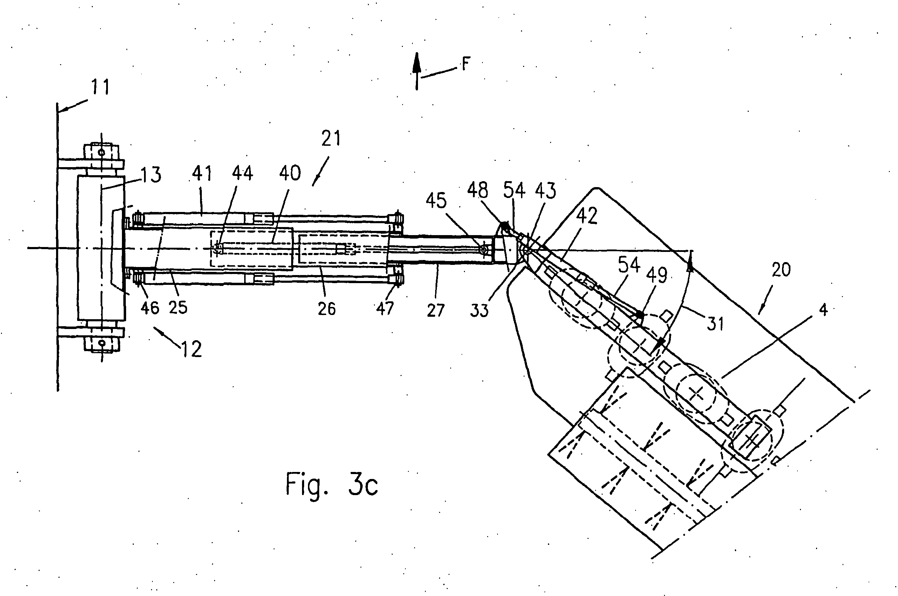

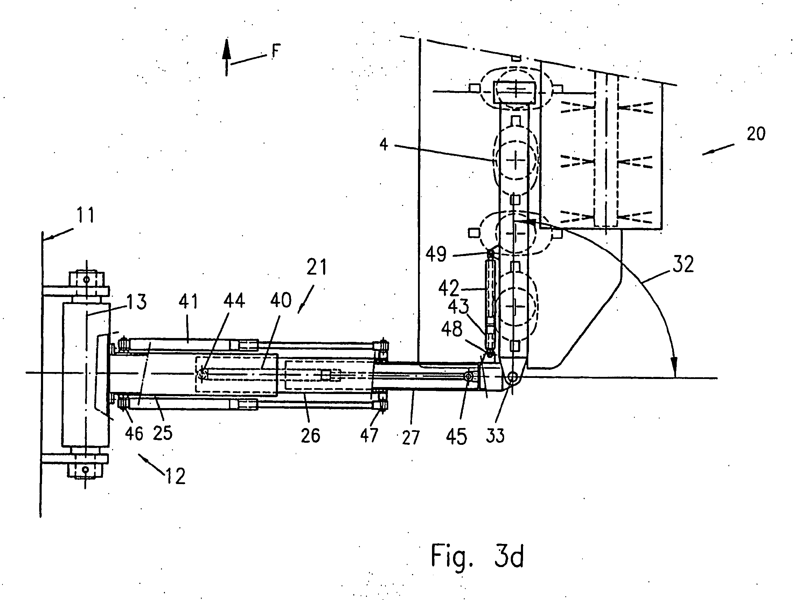

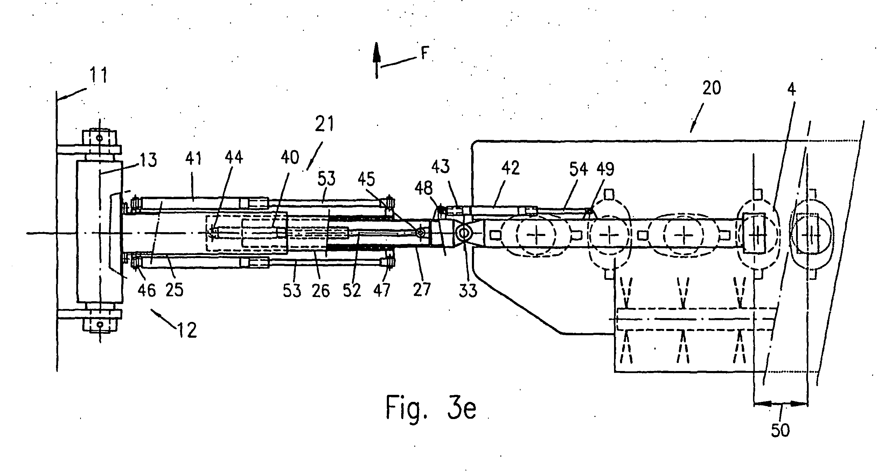

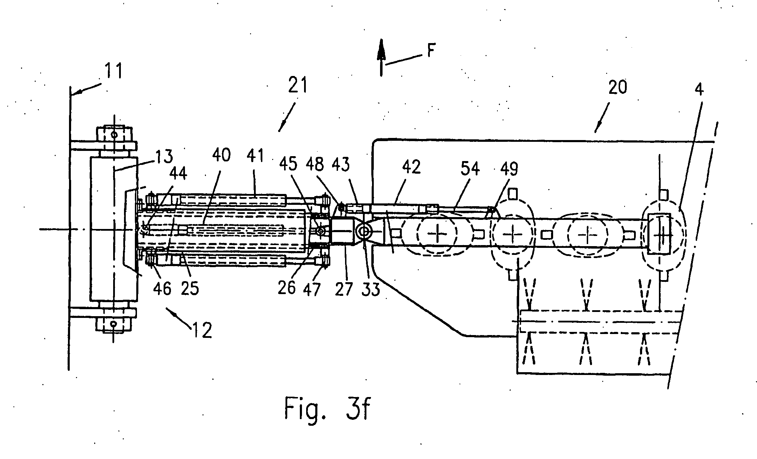

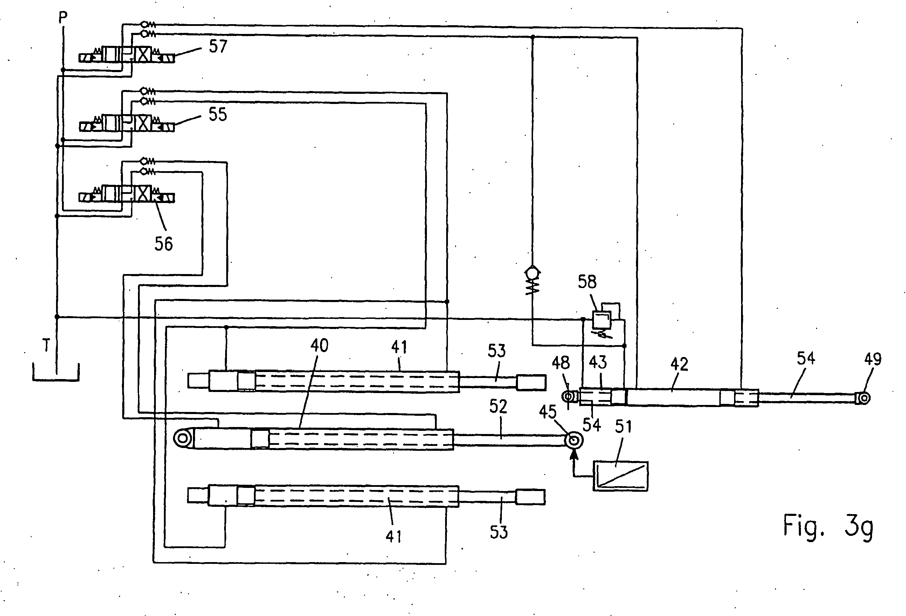

Fig. 3 zeigt ein Ausführungsbeispiel eines selbstfahrenden Mähwerks nach der Erfindung in einer Draufsicht in Arbeitsposition in Geradeausfahrt mit einer gegenüber den Ausführungsformen gemäß Fig.1 und Fig. 2 wesentlich vergrößerten Gesamtarbeitsbreite 22. Diese Vergrößerung wird erreicht, indem der Mähwerkskombination, wie unter Fig.1 und Fig. 2 dargestellt, als Frontmähwerkskombination 24 mit den Mäheinheiten 2,2',3 in gestaffelter Anordnung hintereinanderliegend zusammengefasst, zwei weitere Seitenmäheinheiten 20,20' seitlich ausladend nachgeordnet sind. Fig.3a zeigt eine Frontmähwerkskombination 24' bestehend aus zwei Mäheinheiten 2,2' in Reihe nebeneinander liegend.

Dabei sind die Seitenmäheinheiten 20,20' im Zwischenachsbauraum 9 des Trägerfahrzeugs 1 mit längenveränderbaren Auslegern 21,21' an das Fahrgestell 11 mittels Klappgelenke verschwenkbar um deren Schwenkachsen 13,13' angelenkt. Die längenveränderbaren Ausleger 21,21' ermöglichen es somit, die zusätzlichen Seitenmäheinheiten 20,20' in gestaffelter Anordnung außerhalb der Gesamtarbeitsbreite 17 in entgegengesetzter Richtung der Fahrtrichtung F hinter der Mähwerkskombination 24 anzuordnen.

In Fig. 3b ist der längenveränderbare Ausleger nach der Erfindung in einer Draufsicht gemäß Fig. 3 in vergrößerter Darstellung und teilweise im Horizontalschnitt dargestellt.

Die längenveränderbaren Ausleger 21,21' werden in dem Ausführungsbeispiel gemäß Fig. 3 und Fig. 3b durch 2-fach teleskopierbare Auslegerarme gebildet, die aus den Teleskopelementen 25,26,27 bestehen und deren Verschiebeweg 23,23' durch Ein- oder Ausfahren der Teleskopelemente 26,27 gebildet wird. Die Teleskopelemente 25,26,27 können dabei z.B. durch ineinander greifende Polygon-Hohlprofile, beispielsweise Vierkant- oder Achtkant-Hohlprofile, gebildet werden. Diese beinhalten den Vorteil, dass sie untereinander eine Verdrehsicherung um die Längsachse ihres Profils beinhalten.

Die Stellantriebe der Teleskopik werden gebildet durch Druckmittelzylinder, die als Hydraulikzylinder 40 und 41 ausgebildet sind und die in den Anschlagpunkten 44,45 bzw. 46,47 die Teleskopelemente 25,26,27 untereinander verschiebbar miteinander verbinden. Die Hydraulikzylinder 40 und 41 sind dabei als Differentialkolbenzylinder ausgebildet.

In einer besonders vorteilhaften Ausgestaltung befindet sich der Hydraulikzylinder 40 zum Ein- oder Ausfahren des äußeren Teleskopelements 27, im Innenraum der Teleskopelemente 25,26,27 des jeweiligen längenveränderbaren Auslegers 21,21', wobei dieser Hydraulikzylinder gleichzeitig mit einem Wegaufnehmer als Wegmesssystem 50 ausgestattet ist. Dieses kann dann einer Auswerteeinheit, beispielsweise einer Mikroprozessor gestützten Steuerung, Eingangssignale für automatisierbare Steuerungsabläufe in Bezug auf die Kontrolle der Arbeitsbreite 22 oder zum Ausweichen von Hindernissen 34 oder zur Kontrolle der Überdeckung 28,28' der Arbeitsbreiten liefern. Diese kann auch dazu genutzt werden, um dem Fahrer auf einer Anzeigeeinheit im Führerhaus 14 Auskunft über die momentane Lage der jeweiligen Seitenmäheinheiten 20,20' in Bezug auf die Arbeitsbreite 22 zu geben. Dabei stützt sich der Hydraulikzylinder 40 direkt oder indirekt in seinem Anschlagpunkt 44 an dem horizontalen Klappgelenk 12,12' und damit am Fahrgestell 11 ab.

Der Stellantrieb für das zweite Teleskopelement 26,26' wird von zwei weiteren Hydraulikzylindern 41, die außerhalb der Teleskopelemente 25,26 bzw. 25',26' parallel zu deren Längsachsen in den Anschlagpunkten 46,47 angeschlagen sind gebildet. Auch diese Hydraulikzylinder 41 stützen sich in ihren Anschlagpunkten 46 direkt oder indirekt an dem horizontalen Klappgelenk 12,12' und damit am Fahrgestell 11 ab.

Fig. 3c zeigt einen längenveränderbaren Ausleger nach der Erfindung gemäß Fig. 3b in einer rückwärts gerichteten, um den Schwenkwinkel 31 abgewinkelten äußeren Mäheinheit. Die Abwinkelung erfolgt dabei um die Hochachse des Kniegelenks 33. Diese Abwinkelung ist dann möglich, wenn eine Längenveränderung der das Kniegelenks 33 überbrückenden Drehmomentenstütze, in diesem Ausführungsbeispiel ausgebildet als Hydraulikzylinder, erfolgen kann. Die Drehmomentenstütze ist dabei als Zweifach-Hydraulikzylinder ausgebildet, d.h. zwei Hydraulikzylinder 42 und 43 sind in einem ihnen gemeinsamen Gehäuse untergebracht, wobei die beiden kolbenseitigen Druckmittelräume durch eine Trennwand voneinander getrennt ist. Beide Kolbenstangen liegen dabei in der selben Längsachse und sind in den Anschlagpunkten 48 und 49 zum einen an dem Teleskopelement 27 und zum anderen an der Mäheinheit 20 angeschlagen. Diese konstruktive Ausführung erlaubt eine unabhängige Ansteuerung beider so miteinander verbundener Hydraulikzylinder 42 und 43. In der dargestellten Lage ist die Kolbenstange des Hydraulikzylinders 43 ausgefahren, während dessen die Kolbenstange des Hydraulikzylinders 42 eine gegenüber der Figurendarstellung Fig. 3b unveränderte Lage beibehalten hat.

Fig. 3d zeigt einen längenveränderbaren Ausleger nach der Erfindung gemäß Fig. 3b in einer vorwärts gerichteten, um den Schwenkwinkel 32 abgewinkelten, äußeren Mäheinheit. Die Abwinkelung erfolgt dabei um die Hochachse des Kniegelenks 33. Diese Abwinkelung ist dann möglich, wenn eine Längenveränderung der das Kniegelenks 33 überbrückenden Drehmomentenstütze, ausgebildet als Hydraulikzylinder 42 und 43 , wie unter Fig. 3c beschrieben, möglich ist. In der dargestellten Lage ist die Kolbenstange des Hydraulikzylinders 42 eingefahren, währen dessen die Kolbenstange des Hydraulikzylinders 43 eine gegenüber der Figurendarstellung Fig. 3b unveränderte Lage beibehalten hat.

Fig. 3e zeigt einen längenveränderbaren Ausleger 21 nach der Erfindung gemäß Fig. 3b mit in Richtung des Fahrgestells 11 um den Verschiebeweg 50 verrückten äußeren Mäheinheit. Diese Verschiebung wurde erzeugt, indem die Kolbenstange 52 des Hydraulikzylinders 40 um eben den Betrag des Verschiebewegs 50 eingefahren wurde.

Fig. 3f zeigt einen längenveränderbaren Ausleger 21 nach der Erfindung gemäß Fig. 3b mit in Richtung des Fahrgestells 11 um den maximal möglichen Verschiebeweg 50 verrückten äußeren Mäheinheit. Diese Verschiebung wurde erzeugt, indem die Kolbenstange 52 des Hydraulikzylinders 40 um den maximalen Betrag seines Verschiebewegs und indem die Kolbenstangen 53 der Hydraulikzylinder 41 ebenfalls um den maximalen Betrag ihres Verschiebewegs eingefahren wurden. Diese Summe der maximalen Verschiebewege der Kolbenstangen 52 und 53 ergibt somit den maximalen Verschiebeweg 23 eines Seitenmähwerks 20 bzw. 20'.

Fig. 3g zeigt einen vereinfachten hydraulischen Schaltplan zur Steuerung der Hydraulikzylinder des längenveränderbaren Auslegers 21 gemäß Fig. 3b. Gesteuert werden die Hydraulikzylinder 40,41,42,43 in ihren Bewegungen von den Wegeventilen 55,56,57. Die Kobenstange 52 des Hydraulikzylinders 40 ist dabei mit einem Wegmesssystem gekoppelt, welches Aufschluss über die momentane Lage der Außenmäheinheit liefert und welches ein Eingangssignal zur Steuerung der Überdeckung 28 liefert. Die Kolbenstange 43 ist mittels des Druckbegrenzungsventils 58 hydraulisch eingespannt und dient als Überlastsicherung im Falle der Kollision mit Hindernissen 34. Analog gilt diese Steuerung auch für den Ausleger 21' der gegenüber liegenden Seite.

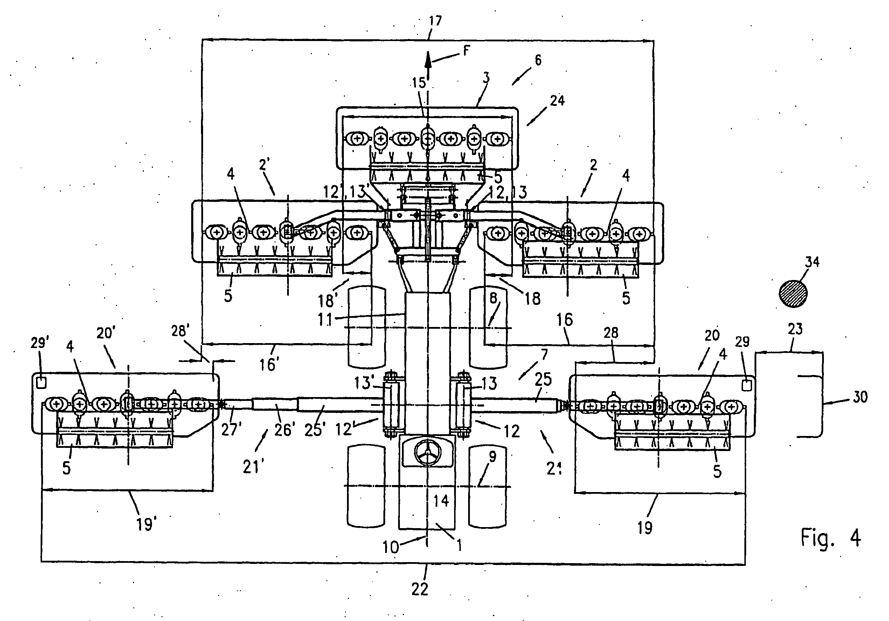

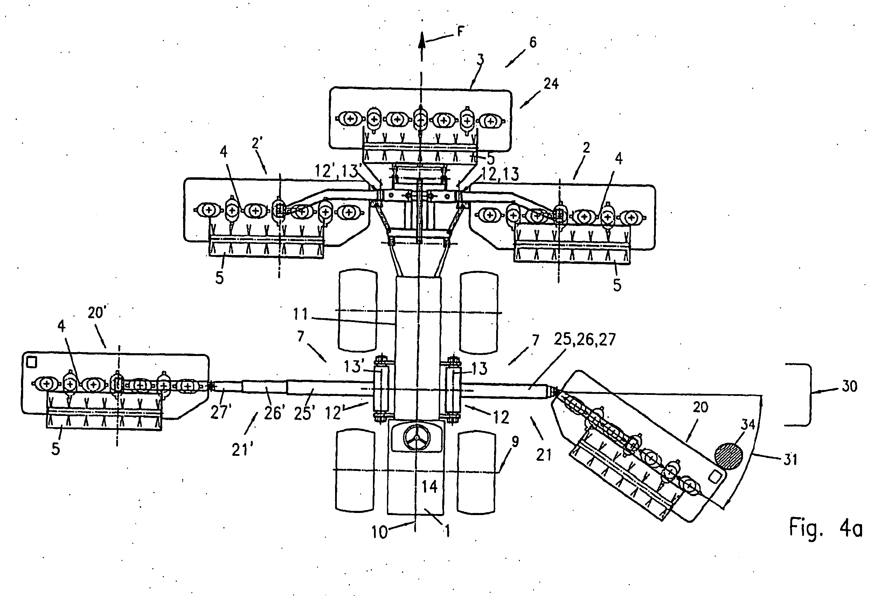

Fig. 4 zeigt ein Ausführungsbeispiel eines selbstfahrenden Mähwerks analog Fig. 3, jedoch mit in Richtung des Fahrgestells verrückten äußeren Mäheinheit gemäß Beschreibung unter Fig. 3e bzw. Fig. 3f, welches bei unveränderter Spur einem Hindernis 34 ausweicht. Dabei ist die Kontur 30 der äußeren Mähwerkseinheit 20 der maximalen Gesamtarbeitsbreite 22 angedeutet.

Fig. 4a zeigt ein Ausführungsbeispiel eines selbstfahrenden Mähwerks analog Fig.4 in einer Kollisionssituation mit einem Hindernis 34 mit abgewinkelter Lage im Sinne einer Anfahr- Überlastsicherung der äußeren Mäheinheit gemäß Beschreibung unter Fig. 3c.

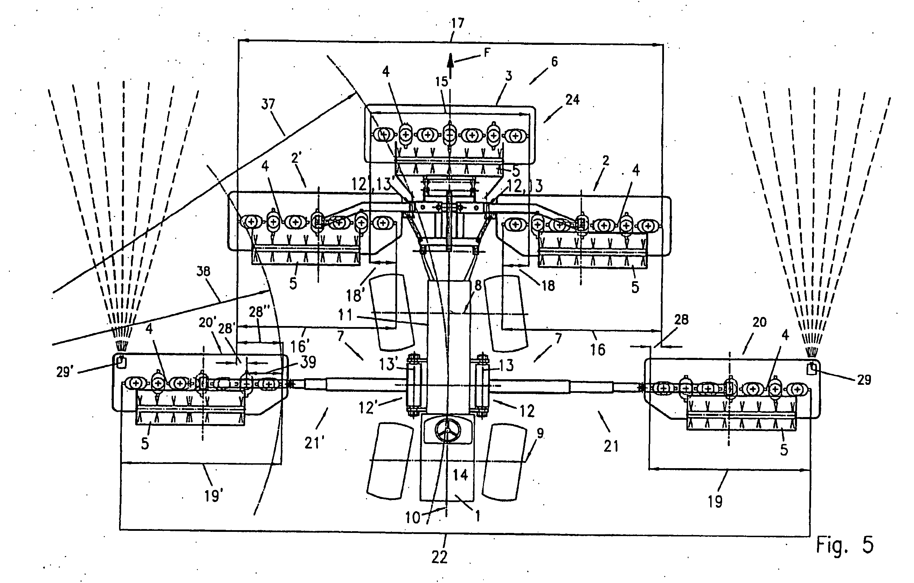

Fig. 5 zeigt ein Ausführungsbeispiel eines selbstfahrenden Mähwerks analog Beschreibung gemäß Fig. 3, allerdings in einer Kurvenfahrt mit korrigierter Überdeckung 28'. Bedingt durch den momentanen mittleren Kurvenradius 37 der Spur des Trägerfahrzeugs 1 ist eine Korrektur der Überdeckung 28' um den Betrag der Verschiebung 39 erforderlich, so dass sich nunmehr die Überdeckung einstellt. Diese Korrektur ist deshalb erforderlich, damit, bedingt durch die Bewegung der inneren Schneidwerkzeuge auf dem Überdeckungsradius 38, keine Überdeckungslücke entsteht, welche im Falle einer Nichtkorrektur während der Kurvenfahrt einen ungemähten Streifen im Übergangsbereich zwischen den Mäheinheiten 2' und 20' entstehen lassen würde.

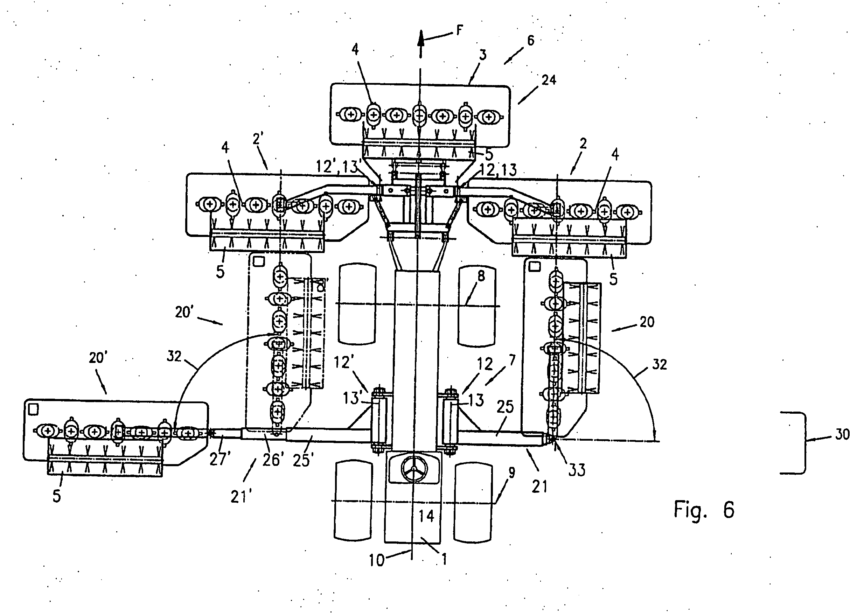

Fig. 6 zeigt ein Ausführungsbeispiel eines selbstfahrenden Mähwerks analog der Beschreibung unter Fig. 3 in einer Zwischenphase zur Verklappung der Seitenmäheinheiten in ihre Transportstellung. Dabei ist die Außenmäheinheit 20 bereits um die Hochachse des Kniegelenks um den Schwenkwinkel 32, um etwa 90°, verschwenkt, wie dieses bereits unter Fig. 3d dargestellt und beschrieben ist.

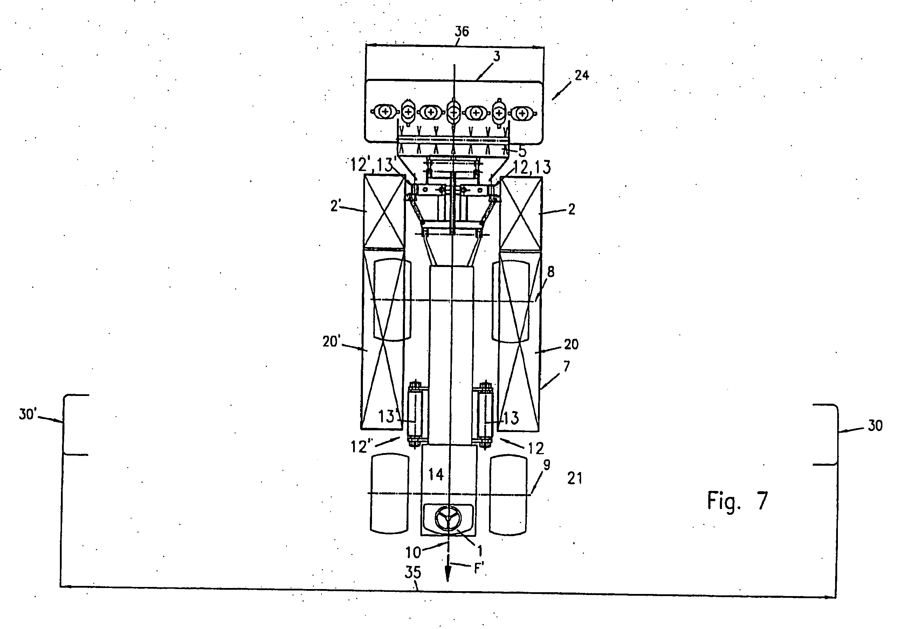

Fig. 7 zeigt ein Ausführungsbeispiel eines selbstfahrenden Mähwerks analog der Beschreibung unter Fig. 3 in seiner Endphase nach der Überführung der Seitenmäheinheiten 2,2 und 20,20' in ihre Transportposition in einer Draufsicht. Dazu wurden auch die Seitenmäheinheiten 2,2 um ihre etwa in Fahrtrichtung weisenden Schwenkachsen 13,13' ihrer horizontalen Klappgelenke 12 und die Seitenmäheinheiten 20,20' 2 ebenfalls um ihre etwa in Fahrtrichtung weisenden Schwenkachsen 13,13' ihrer horizontalen Klappgelenke 12 nach oben in an sich bekannter weise von Hydraulikzylinder verschwenkt.

Nach dem Verklappungsvorgang kann das Führerhaus 14, bedingt durch seine Rückfahreinrichtung um 180° verschwenkt werden, so dass die Fahrtrichtung F' als Fahrtrichtung für den Straßentransport nunmehr entgegengesetzt der Fahrtrichtung F in Arbeitsstellung gerichtet ist. Durch diesen Verklappungsvorgang kann die Arbeitskonturbreite 35 auf die Transportkonturbreite 36 reduziert werden.

Bedingt durch die Steuerbarkeit der Längenveränderbarkeit der Ausleger 21,21 auch im Betriebszustand des Mähens kann die Überdeckung 28,28' somit durch Beaufschlagung der Hydraulikzylinder 40 und in erweiterter Form durch gleichzeitige oder nichtgleichzeitige Beaufschlagung der Hydraulikzylinder 41 korrigiert, d.h. gesteuert und eingestellt werden.

Dieses beinhaltet insbesondere in der Geradeausfahrt den Vorteil, dass die Überdeckung 28,28 minimal gehalten werden kann, welches zu einer größeren Flächenleistung und damit zur Verbesserung der Wirtschaftlichkeit des selbstfahrenden Mähwerks beiträgt. Die Steuerung der längenveränderbaren Ausleger kann sowohl manuell als auch automatisch erfolgen. In besonders vorteilhafter Weise kann diese Überdeckungssteuerung von einem mikroprozessorgestützten Regelkreis übernommen werden, welcher von einem Ortungssystem 29 zur Hinderniserkennung unterstützt wird.

Ein derartiges Ortungssystem 29 kann beispielsweise einen Laserstrahldetektor beinhalten, der innerhalb des Erfassungsbereiches Hindernisse erkennt und lokalisieren kann.

Dieses ist besonders dann von Vorteil, wenn es um das Freimähen von Feldrändern geht, da auf Grund der großen Entfernung vom Fahrersitz zu den Außenbereichen die Abstände zwischen der Außenkontur 30 der Seitenmäheinheiten 20,20' und den Hindernissen 34 oft nicht sicher eingeschätzt werden können. Um dann aber Kollisionen zu vermeiden, wird in der Praxis ein entsprechend großer Sicherheitsabstand vom Hindernis, z.B. ein Begrenzungspfahl, eingehalten, welches zur Folge hat, das mehr ungemähtes Futter stehen bleibt.

Beim Einsatz derartiger Ortungssysteme 29 in Verbindung mit gesteuerter und/oder geregelter Querverschiebung von längenveränderbaren Auslegern nach der Erfindung können dann derartige Hindernisse relativ nah umfahren werden, ohne dass zu befürchten ist, dass diese berührt werden.

Sollte es dennoch zu einer Kollision kommen, so kann die betroffene Seitemäheinheit 20 oder 21' unter äußerer Krafteinwirkung rückwärtig um einen Schwenkwinkel 31 um die Hochachse des Kniegelenks 33 ausweichen.

Ebenfalls können bei Kurvenfahrten Überdeckungslücken zwischen den Mäheinheiten 2,20 bzw. 2',20' durch automatische Steuerung durch einen Regelkreis vermieden werden. Dazu wird erfindungsgemäß vorgeschlagen, beispielsweise den Drehwinkelversatz zwischen Achs- und Ausgleichskegelrädern des Differentialgetriebes einer oder beider Antriebsachsen in der Vorderachse 8 und/oder Hinterachse 9 mittels Drehwinkelerfassungssensoren zu erfassen und um aus diesen den momentanen mittleren Kurvenradius der Spur des Trägerfahrzeugs 1 zu errechnen.

Daraus wiederum können die erforderlichen Überdeckungskorrekturen bei Kurvenfahrten errechnet werden, welche dann automatisch von den Stellantrieben z.B. den Hydraulikzylinder 40,41 der Querverschiebung vorgenommen werden. Dabei liefert ein Wegmesssystem 51 die erforderliche Rückkopplung im Sinne einer Regelstrecke zum Vergleich von Ist- und Sollwert der Überdeckungen 28,28'.

Ebenfalls kann ein Ortungssystem 29 in gleicher Weise zur Erfassung der Bestandskante des zu mähenden Futters dienen, wodurch eine automatische Lenkung des Trägerfahrzeugs realisiert werden kann in deren Regelkreislauf die Querverschiebung der Seitemäheinheit 20 oder 21' ebenfalls eingebunden sein kann.

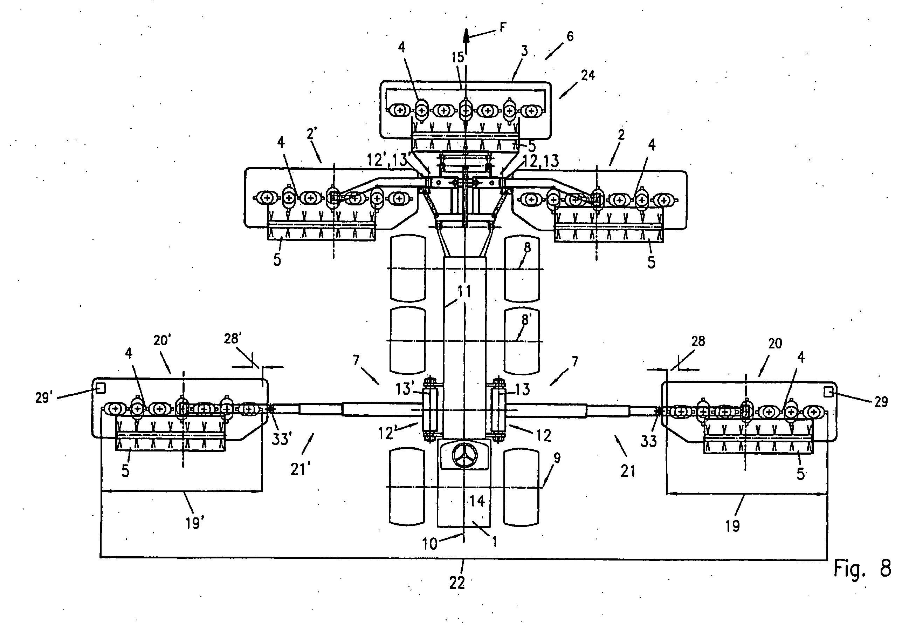

Fig. 8 zeigt ein Ausführungsbeispiel eines selbstfahrenden Mähwerks 1 nach der Erfindung in einer Draufsicht in Arbeitsposition in Geradeausfahrt, wobei die Forderachse des Trägerfahrzeugs als Zweifachachse 8,8' ausgebildet ist. Diese Ausgestaltung dient insbesondere der Reduzierung der Achslasten und damit zur Reduzierung der Radaufstandskräfte, welches zur Schonung der Grasnabe beiträgt.

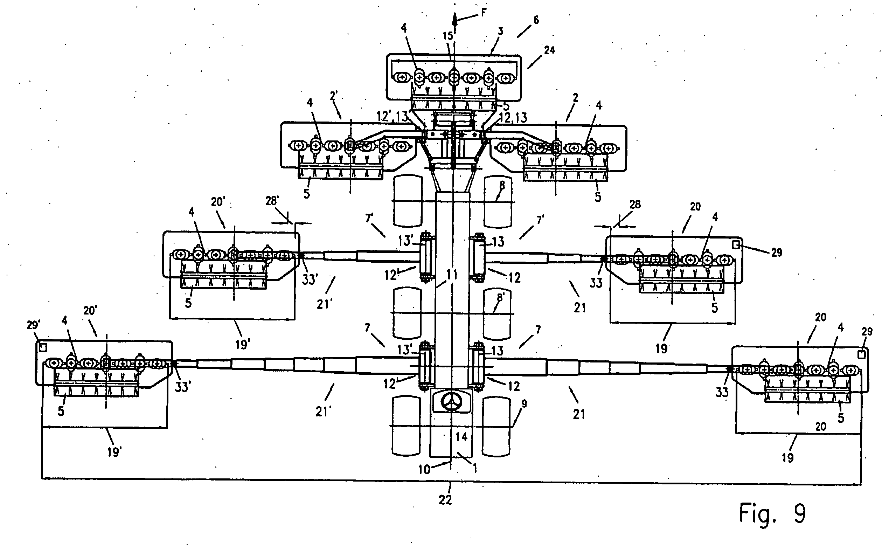

Fig. 9 zeigt ein Ausführungsbeispiel eines selbstfahrenden Mähwerks 1 nach der Erfindung in einer Draufsicht in Arbeitsposition in Geradeausfahrt, wobei die Forderachse 8,8' des Trägerfahrzeugs als Zweifachachse ausgebildet ist und beide Radachsen 8,8' soweit auseinander gerückt sind, dass sie eine weiteren eine Zwischenachsanbauraum 7' bilden, in dem weitere Seitenmähwerke 20,20' an das Trägerfahrzeug 1 angelenkt werden können

Die Anwendungspraxis der Erfindung zeigt, dass sich ein besonders wirtschaftlicher Betrieb eines derartigen selbstfahrenden Mähwerks mit einer Frontmähwerkskombination 24 in Verbindung mit zwei Seitenmäheinheiten 20,20' dann ergibt, wenn die Gesamtarbeitsbreite (22) etwa im Bereich von 13 bis 15 Metern, vorzugsweise etwa bei 14 Meter liegt, wohingegen bei einem selbstfahrenden Mähwerk mit einer Frontmähwerkskombination 24' in Verbindung mit zwei Seitenmäheinheiten 20,20' gemäß Fig. 3 eine besonders wirtschaftliche Gesamtarbeitsbreite (22) etwa im Bereich von 10 bis 13 Metern, vorzugsweise etwa bei 11,50 Meter liegt.

Eine weitere Steigerung der Gesamtarbeitsbreite 22 gemäß Fig.9 ist möglich mit einer Frontmähwerkskombination 24,24' mit insgesamt vier Seitenmähwerken 20,20', wobei zwei Mähwerke 20,20' im Zwischenachsanbauraum 7 zwischen den Vorderachsen 8 und 8', und zwei weitere Mähwerke 20,20' im Zwischenachsanbauraum 7 zwischen den Vorderachse 8' und 9 mittels längenveränderbarer Auslegern 21,21' an das Trägerfahrzeug 1 angelenkt sind. Die so erzielbare Gesamtarbeitsbreite 22 liegt etwa innerhalb des Bereichs von 15 bis 20 Metern, vorzugsweise etwa bei 17,5 Metern.

Eine Frontmähwerkskombination in Verbindung mit der Erfindung kann grundsätzlich aber auch aus mehreren in Reihe liegenden Mäheinheiten bestehen, beispielsweise aus drei nebeneinander liegenden Mäheinheiten 2,2',3, die dann für den Straßentransport ebenfalls in eine günstigere Transportposition überführt werden können.

## Patentansprüche

1. Selbstfahrendes Mähwerk bestehend aus einem Trägerfahrzeug (1) mit seitlich an Klappgelenken (12,12') an das Fahrgestell (11) mittels längenveränderbarer Ausleger (21,21') angelenkten Seitenmähwerken (2,2',20,20'), die mit einer im Betriebszustand des Mähens frontseitig angelenkten Mäheinheit (24,24') zusammenarbeiten, **dadurch gekennzeichnet, dass** das Führerhaus (14) in seine Lage in Bezug auf die Fahrtrichtung und in Bezug auf den Betriebszustand des Mähens im rückwärtigen Bereich des Trägerfahrzeugs (1) positioniert und im Bezug auf den Betriebszustand des Straßentransports im vorderen Bereich des Trägerfahrzeugs (1) positioniert ist.

2. Selbstfahrendes Mähwerk nach Anspruch 1, **dadurch gekennzeichnet, dass** das Führerhaus (14) einschließlich des Führerstandes um 180° geschwenkt werden kann.

3. Selbstfahrendes Mähwerk nach Anspruch 1 und 2, **dadurch gekennzeichnet, dass** der längenveränderbare Ausleger (21,21') als teleskopierbarer Ausleger mit wenigstens zwei relativ zueinander verschiebbaren Teleskopelementen (25,27) ausgebildet ist, und dass dieser mittels eines horizontalen Klappgelenks (12,12') mit etwa in Fahrtrichtung verlaufender Schwenkachse (13,13') an das Fahrgestell (11) des Trägerfahrzeugs (1) angelenkt ist.

4. Selbstfahrendes Mähwerk nach Anspruch 1 und 2, **dadurch gekennzeichnet, dass** der längenveränderbare Ausleger (21,22) ein Kniegelenk (33) aufweist, welches durch einen Hydraulikzylinder (42) als längenveränderbare Drehmomentenstütze überbrückt ist.

5. Selbstfahrendes Mähwerk nach Anspruch 4, **dadurch gekennzeichnet, dass** das Kniegelenk (33) durch einen Hydraulikzylinder (42) mittels eines Druckbegrenzungsventils (58) als Überlastsicherung überbrückt ist.

6. Selbstfahrendes Mähwerk nach Anspruch 4, **dadurch gekennzeichnet, dass** das Kniegelenk (33) durch eine integrierte bauliche Einheit von in Reihe angeordneten Hydraulikzylindern (42,43) als längenveränderbare Drehmomentenstütze überbrückt ist.

7. Selbstfahrendes Mähwerk nach Anspruch 1 und 2, **dadurch gekennzeichnet, dass** der Stellantrieb eines längenveränderbaren Auslegers (21,21') mindestens einen druckmittelbeaufschlagten Hydraulikzylinder (40) umfasst, und der längenveränderbare Ausleger (21,21') mit einem Wegmesssystem (51) ausgestattet ist, welches ein Eingangsignal für eine Mikroprozessor gesteuerte Auswerteeinheit erzeugen kann.

8. Selbstfahrendes Mähwerk nach Anspruch 7 **dadurch gekennzeichnet, dass** das Eingangssignal des Wegmesssystem (51) einen Rückschluss auf die momentan eingestellte Arbeitsbreite (22) ermöglicht und diese mittels einer Anzeigeeinheit im Führerhaus (14) visualisiert dargestellt werden kann.

9. Selbstfahrendes Mähwerk nach Anspruch 1 und 2, **dadurch gekennzeichnet, dass** das selbstfahrende Mähwerk insgesamt vier Mäheinheiten (2,2',20,20') umfasst, wobei im Frontanbauraum (6) die Mäheinheiten (2,2') und im Zwischenachsanbauraum (7) die Mäheinheiten (20,20') angeordnet sind.

10. Selbstfahrendes Mähwerk nach Anspruch 1 und 2, **dadurch gekennzeichnet, dass** das selbstfahrende Mähwerk insgesamt fünf Mäheinheiten (2,2',3,20,20') umfasst, wobei im Frontanbauraum (6) die Mäheinheiten (2,2') und im Zwischenachsanbauraum (7) die Mäheinheiten (20,20') angeordnet sind, und wobei die Mäheinheiten (2,2',3) gestaffelt hintereinander, oder in Reihe nebeneinander angeordnet sein können.

11. Selbstfahrendes Mähwerk nach Anspruch 1 in Verbindung mit einem oder mehreren der vorhergehenden Ansprüche, **dadurch gekennzeichnet, dass** der Betrag wenigstens eines Überdeckungsbereichs (28,28') zwischen den äußeren Mäheinheiten (20,20') und den daran anschließenden vorlaufenden Mäheinheiten (2,2') fernbedienbar vom Fahrersitz aus einstellbar ist.

12. Selbstfahrendes Mähwerk nach Anspruch 1 in Verbindung mit einem oder mehreren der vorhergehenden Ansprüche, **dadurch gekennzeichnet, dass** der Betrag eines Überdeckungsbereichs (28,28') zwischen den äußeren Mäheinheiten (20,20') und den daran anschließenden vorlaufenden Mäheinheiten (2,2') als Funktion der Drehwinkelverschiebungen der Achs- und Ausgleichskegelräder eines Differentialgetriebes automatisch steuerbar ist.

13. Selbstfahrendes Mähwerk nach Anspruch 1 in Verbindung mit einem oder mehreren der vorhergehenden Ansprüche, **dadurch gekennzeichnet, dass** die außenliegenden Mäheinheiten (20,20') durch ein Ortungssystem (29) in Bezug auf ihre Lage quer zur Fahrtrichtung (F) gesteuert werden können.

14. Selbstfahrendes Mähwerk nach Anspruch 1 in Verbindung mit einem oder mehreren der vorhergehenden Ansprüche, **dadurch gekennzeichnet, dass** das Trägerfahrzeug (1) durch eine Hundeganglenkung in Verbindung mit einer Tipptastersteuerung durch eine vorgetaktete Impulsdauer quer zur Fahrtrichtung versetzt werden kann.

15. Selbstfahrendes Mähwerk nach Anspruch 1 und 2 **dadurch gekennzeichnet, dass** der längenveränderbare Ausleger (21,21') ein Kniegelenk (33) aufweist, um dessen Schwenkachse die äußere Mäheinheit (20,20') um einen Schwenkwinkel (32) von etwa 90° in eine Transportposition verschwenkt werden kann.

16. Selbstfahrendes Mähwerk nach Anspruch 1 und 2 in Verbindung mit einem oder mehreren der vorhergehenden Ansprüche, **dadurch gekennzeichnet, dass** das Führerhauses (14) in der Arbeitsstellung des Mähbetriebs relativ zur Fahrtrichtung (F) hinter den weitest ausladenden Mäheinheiten (20,20') angeordnet ist.

17. Selbstfahrendes Mähwerk nach Anspruch 1 in Verbindung mit einem oder mehreren der vorhergehenden Ansprüche, **dadurch gekennzeichnet, dass** das Führerhauses (14) in der Transportstellung für die Straßenfahrt relativ zur Fahrtrichtung (F) vor den weitest ausladenden Mäheinheiten (20,20') angeordnet ist.

18. Selbstfahrendes Mähwerk nach Anspruch 1 in Verbindung mit einem oder mehreren der vorhergehenden Ansprüche, **dadurch gekennzeichnet, dass** die dem Fronanbauraum zugewande Vorderachse als zweifach Achse (8,8') ausgebildet ist.

19. Selbstfahrendes Mähwerk nach Anspruch 18, **dadurch gekennzeichnet, dass** die beabstandeten Achsen (8,8') einen weiteren Zwischenachsbauraum (7') umfassen, der ebenfalls Seitenmähwerke 20,20' aufnehmen kann.

20. Selbstfahrendes Mähwerk nach Anspruch 1 in Verbindung mit einem oder mehreren der vorhergehenden Ansprüche, **dadurch gekennzeichnet, dass** die Gesamtarbeitsbreite (22) etwa im Bereich von 10 bis 13 Metern, vorzugsweise etwa bei 11,5 Meter liegt.

21. Selbstfahrendes Mähwerk nach Anspruch 1 in Verbindung mit einem oder mehreren der vorhergehenden Ansprüche, **dadurch gekennzeichnet, dass** die Gesamtarbeitsbreite (22) etwa im Bereich von 13 bis 15 Metern, vorzugsweise etwa bei 14 Meter liegt.

22. Selbstfahrendes Mähwerk nach Anspruch 1 in Verbindung mit einem oder mehreren der vorhergehenden Ansprüche, **dadurch gekennzeichnet, dass** die Gesamtarbeitsbreite (22) etwa im Bereich von 15 bis 20 Metern, vorzugsweise etwa bei 17 Meter liegt.

## Claims

1. Self-propelled mower consisting of a support vehicle (1) with lateral mower units (2, 2', 20, 20') that are hinged laterally on folding hinges (12, 12') onto the chassis frame (11) by means of length-adjustable radial arms (21), which lateral mower units cooperate with a mower unit (24, 24') that is hinged at the front In the operating state of the mower, **characterised in that** the driver's cab (14) is positioned in the rear section of the support vehicle (1) with respect to the driving direction and the operating state of the mower and is positioned In the front section of the support vehicle (1) with respect to the operating state of road transport.

2. Self-propelled mower according to claim 1, **characterised in that** the driver's cab (14) including the driver's compartment can be pivoted about 180°.

3. Self-propelled mower according to claim 1 and 2, **characterised in that** the length-adjustable radial arm (21, 21') is designed as a telescopic radial arm with at least two telescopic elements (25, 27) which are displaceable in relation to one another, and **in that** the radial arm is hinged by means of a horizontal flap hinge (12, 12') with a pivot axis (13, 13') running in the direction of travel onto the chassis (11) of the support vehicle (1).

4. Self-propelled mower according to claim 1 and 2, **characterised in that** the length-adjustable radial arm (21, 22) comprises a knee joint (33), which is bridged by a hydraulic cylinder (42) as a length-adjustable torque support.

5. Self-propelled mower according to claim 4, **characterised in that** the knee joint (33) is bridged by a hydraulic cylinder (42) by means of a pressure limiting valve (58) as an overload valve.

6. Self-propelled mower according to claim 4, **characterised in that** the knee joint (33) is bridged by an integrated structural unit by hydraulic cylinders (42, 43) arranged in series as length-adjustable torque supports.

7. Self-propelled mower according to claim 1 and 2, **characterised in that** the adjusting drive of a length-adjustable radial arm (21, 21') comprises at least one pressure means charged hydraulic cylinder (40), and the length-adjustable radial arm (21, 21') is equipped with a position measuring system (51), which can generate an input signal for a microprocessor controlled evaluation unit.

8. Self-propelled mower according to claim 7, **characterised in that** the input signal of the position measuring system (51) allows a conclusion to be made about the currently set working width (22) and this can be visualised by means of a display unit in the driver's cab (14),

9. Self-propelled mower according to claim 1 and 2, **characterised in that** the self-propelled mower comprises a total of four mower units (2, 2', 20, 20'), whereby In the front attachment space (6) the mower units (2, 2') are arranged and In the mid-mounted attachment space (7) the mower units (20, 20') are arranged.

10. Self-propelled mower according to claim 1 and 2, **characterised in that** the self-propelled mower comprises a total of five mower units (2, 2', 3, 20, 20'), whereby in the front attachment space (6) the mower units (2, 2') are arranged and in the mid-mounted attachment space (7) the mower units (20, 20') are arranged, and wherein the mower units (2, 2', 3) can be staggered behind one another or can be arranged next to one another in series.

11. Self-propelled mower according to claim 1 in connection with one or more of the preceding claims, **characterised in that** the size of at least one covering section (28, 28') between the outer mower units (20, 20') and the adjoining mower units (2, 2') can be adjusted by remote control from the driver's seat.

12. Self-propelled mower according to claim 1 in connection with one or more of the preceding claims, **characterised in that** the size of a covering section (28, 28') between the outer mower units (20, 20') and the adjoining preceding mower units (2, 2') can be controlled automatically as a function of the rotary angle displacements of the axial and compensation bevel gears of a differential gear.

13. Self-propelled mower according to claim 1 in connection with one or more of the preceding claims, **characterised in that** the outerlying mower units (20, 20') can be controlled by a locating system (29) in relation to their position at right angles to the direction of travel (F).

14. Self-propelled mower according to claim 1 in connection with one or more of the preceding claims, **characterised in that** the support vehicle (1) can be offset at right angles to the direction of travel by a dog's movement steering in connection with a finger-tip control by a presynchronised pulse duration.

15. Self-propelled mower according to claim 1 and 2 **characterised in that** the length-adjustable radial arm (21, 21') comprises a knee joint (33), about the pivot axis of which the outer mower unit (20, 20') can be pivoted about a pivot angle (32) of about 90° into a transport position.

16. Self-propelled mower according to claim 1 and 2 in connection with one or more of the preceding claims, **characterised in that** the driver's cab (14) in the operating position of mowing operation is arranged relative to the direction of travel (F) behind the farthest projecting mower units (20, 20').

17. Self-propelled mower according to claim 1 in connection with one or more of the preceding claims, **characterised in that** the driver's cab (14) in the transport position for road travel is arranged relative to the direction of travel (F) in front of the farthest projecting mower units (20, 20').

18. Self-propelled mower according to claim 1 in connection with one or more of the preceding claims, **characterised in that** the front axle facing the front attachment space is designed as a double axle (8, 8').

19. Self-propelled mower according to claim 18, **characterised in that** the spaced apart axles (8, 8') comprise a further mid-mounted attachment space (7') which can also mount lateral mower units (20, 20').

20. Self-propelled mower according to claim 1 in connection with one or more of the preceding claims, **characterised in that** the entire working width (22) is in the region of 10 to 13 metres, preferably about 11.5 metres.

21. Self-propelled mower according to claim 1 in connection with one or more of the preceding claims, **characterised in that** the entire working width (22) is in the region of 13 to 15 metres, preferably about 14 metres.

22. Self-propelled mower according to claim 1 in connection with one or more of the preceding claims, **characterised in that** the entire working width (22) is in the region of 15 to 20 metres, preferably about 17 metres.

## Revendications

1. Mécanisme de fauchage autotracté composé d'un véhicule porteur (1) ayant des mécanismes de fauchage latéraux (2, 2', 20, 20') articulés latéralement à des articulations rabattables (12, 12') sur le châssis (11) au moyen de bras (21, 21') à longueur variable, lesquels mécanismes de fauchage coopèrent avec une unité de fauchage (24, 24') articulée à l'avant dans l'état de fonctionnement correspondant au fauchage,
**caractérisé en ce que** la cabine du conducteur (14) est positionnée dans la zone arrière du véhicule porteur (1) relativement au sens de la marche et à l'état de fonctionnement correspondant au fauchage et dans la zone avant du véhicule porteur (1) relativement à l'état de fonctionnement correspondant au transport sur route.

2. Mécanisme de fauchage autotracté selon la revendication 1, **caractérisé en ce que** la cabine du conducteur (14), y compris le poste du conducteur, peut être pivotée de 180°.

3. Mécanisme de fauchage autotracté selon les revendications 1 et 2,
**caractérisé en ce que** le bras à longueur variable (21, 21') est réalisé sous la forme d'un bras télescopique ayant au moins deux éléments télescopiques (25, 27) pouvant coulisser l'un par rapport à l'autre et **en ce que** celui-ci est articulé sur le châssis (11) du véhicule porteur (1) au moyen d'une articulation rabattable (12, 12') horizontale ayant un axe de pivotement (13, 13') s'étendant approximativement dans le sens de la marche.

4. Mécanisme de fauchage autotracté selon les revendications 1 et 2,
**caractérisé en ce que** le bras à longueur variable (21, 21') présente une genouillère (33) qui est doublée d'un cylindre hydraulique (42) en tant que support de couple à longueur variable.

5. Mécanisme de fauchage autotracté selon la revendication 4,
**caractérisé en ce que** la genouillère (33) est doublée d'un cylindre hydraulique (42) au moyen d'une soupape de limitation de pression (58) en tant que sécurité de surcharge.

6. Mécanisme de fauchage autotracté selon la revendication 4,
**caractérisé en ce que** la genouillère (33) est doublée d'une unité intégrée à la construction composée de cylindres hydrauliques (42, 43) agencés en ligne en tant que support de couple à longueur variable.

7. Mécanisme de fauchage autotracté selon les revendications 1 et 2,
**caractérisé en ce que** le vérin d'un bras à longueur variable (21, 21') comprend au moins un cylindre hydraulique (40) alimenté par un fluide sous pression et le bras à longueur variable (21, 21') est équipé d'un système de mesure de déplacement (51), lequel peut produire un signal d'entrée pour une unité d'analyse commandée par micro-processeur.

8. Mécanisme de fauchage autotracté selon la revendication 7,
**caractérisé en ce que** le signal d'entrée du système de mesure de déplacement (51) permet de déduire la largeur de travail actuellement réglée (22) et celle-ci peut être représentée et visualisée au moyen d'une unité d'affichage dans la cabine du conducteur (14),

9. Mécanisme de fauchage autotracté selon les revendications 1 et 2,
**caractérisé en ce que** le mécanisme de fauchage autotracté comprend en tout quatre unités de fauchage (2, 2', 20, 20'), les unités de fauchage (2, 2') étant agencées dans l'espace de montage frontal (6) et les unités de fauchage (20, 20') dans l'espace de montage entre les axes (7).

10. Mécanisme de fauchage autotracté selon les revendications 1 et 2,
**caractérisé en ce que** le mécanisme de fauchage autotracté comprend en tout cinq unités de fauchage (2, 2', 3, 20, 20'), les unités de fauchage (2, 2') étant agencées dans l'espace de montage frontal (6) et les unités de fauchage (20, 20') dans l'espace de montage entre les axes (7), et les unités de fauchage (2, 2', 3) pouvant être agencées de manière échelonnée les unes derrière les autres ou en ligne les unes à côté des autres.

11. Mécanisme de fauchage autotracté selon la revendication 1 conjointement avec une ou plusieurs des revendications précédentes,
**caractérisé en ce que** la valeur d'au moins une zone de recouvrement (28, 28') entre les unités de fauchage extérieures (20, 20') et les unités de fauchage (2, 2') consécutives à l'avant peut être réglée à distance depuis le siège du conducteur.

12. Mécanisme de fauchage autotracté selon la revendication 1 conjointement avec une ou plusieurs des revendications précédentes,
**caractérisé en ce que** la valeur d'une zone de recouvrement (28, 28') entre les unités de fauchage extérieures (20, 20') et les unités de fauchage consécutives à l'avant (2, 2') peut être commandée de façon automatique en tant que fonction des déplacements angulaires des roues d'axe et des satellites d'un différentiel.

13. Mécanisme de fauchage autotracté selon la revendication 1 conjointement avec une ou plusieurs des revendications précédentes,
**caractérisé en ce que** les unités de fauchage situées à l'extérieur (20, 20') peuvent être commandées par un système de localisation (29) en fonction de leur position transversalement au sens de la marche (F).

14. Mécanisme de fauchage autotracté selon la revendication 1 conjointement avec une ou plusieurs des revendications précédentes,
**caractérisé en ce que** le véhicule porteur (1) peut être déplacé transversalement au sens de la marche par une direction de marche en crabe en liaison avec une commande à touches à impulsions par une durée d'impulsion pré-synchronisée.

15. Mécanisme de fauchage autotracté selon les revendications 1 et 2,
**caractérisé en ce que** le bras à longueur variable (21, 21') présente une genouillère (33) autour de l'axe de pivotement de laquelle l'unité de fauchage extérieure (20, 20') peut être pivotée d'un angle de pivotement (32) d'environ 90° dans une position de transport.

16. Mécanisme de fauchage autotracté selon les revendications 1 et 2 conjointement avec une ou plusieurs des revendications précédentes,
**caractérisé en ce que**, dans la position de travail du mode de fauchage, la cabine du conducteur (14) est située derrière les unités de fauchage (20, 20') au porte-à-faux le plus grand relativement au sens de la marche (F).

17. Mécanisme de fauchage autotracté selon la revendication 1 conjointement avec une ou plusieurs des revendications précédentes,
**caractérisé en ce que**, dans la position de transport pour la conduite sur route, la cabine du conducteur (14) est située à l'avant des unités de fauchage (20, 20') au porte-à-faux le plus grand relativement au sens de la marche (F).

18. Mécanisme de fauchage autotracté selon la revendication 1 conjointement avec une ou plusieurs des revendications précédentes,
**caractérisé en ce que** l'essieu avant orienté vers l'espace de montage frontal est réalisé sous la forme d'un double essieu (8, 8').

19. Mécanisme de fauchage autotracté selon la revendication 18,
**caractérisé en ce que** les essieux espacés (8, 8') comportent un autre espace de montage entre les axes (7') qui peut également abriter les mécanismes de fauchage latéraux (20, 20').

20. Mécanisme de fauchage autotracté selon la revendication 1 conjointement avec une ou plusieurs des revendications précédentes,
**caractérisé en ce que** la largeur de travail totale (22) est comprise entre environ 10 et 13 mètres et est de préférence égale à environ 11,5 mètres.

21. Mécanisme de fauchage autotracté selon la revendication 1 conjointement avec une ou plusieurs des revendications précédentes,
**caractérisé en ce que** la largeur de travail totale (22) est comprise entre environ 13 et 15 mètres et est de préférence égale à environ 14 mètres.

22. Mécanisme de fauchage autotracté selon la revendication 1 conjointement avec une ou plusieurs des revendications précédentes,
**caractérisé en ce que** la largeur de travail totale (22) est comprise entre environ 15 et 20 mètres et est de préférence égale à environ 17 mètres.
